# EUROPÄISCHE PATENTSCHRIFT

(11) **EP 3 684 656 B1**
(45) Veröffentlichungstag und Bekanntmachung des Hinweises auf die Patenterteilung: **07.07.2021**
(21) Anmeldenummer: 18778398.0
(22) Anmeldetag: 17.09.2018
(51) Int. Cl.: B60R 22/185

(54) **SCHLOSSZUNGE MIT ABDECKUNG**
BELT TONGUE HAVING A COVER
LANGUETTE DE BOUCLE MUNIE D'UN CACHE

(30) Priorität: 18.09.2017 DE 102017121613
(43) Veröffentlichungstag der Anmeldung: 29.07.2020
(73) Patentinhaber: Autoliv Development AB, 447 83 Vårgårda (SE)
(72) Erfinder: HERMANN, Michel, 25421 Pinneberg (DE); BERG, Robert, 25370 Seester (DE)
(74) Vertreter: Feucker, Max Martin
(86) Internationale Anmeldenummer: PCT/EP2018/075024
(87) Internationale Veröffentlichungsnummer: WO 2019/053245

(56) Entgegenhaltungen:
- WO-A2-2012/105762
- DE-A1-102006 033 544
- DE-A1-102014 114 207
- US-A1- 2015 173 461

## Beschreibung

Die vorliegende Erfindung betrifft eine Schlosszunge mit einem sich in einer Einsteckrichtung erstreckenden Zungenkörper, in dem quer zur Einsteckrichtung ein Gurtschlitz zur Durchführung eines Gurtbandes ausgebildet ist, und einem beweglich in dem Zungenkörper angeordneten Blockierelement, wobei das Gurtband in einer unbelasteten Durchlaufstellung des Blockierelements durch den Gurtschlitz beweglich ist und in einer durch eine in das Gurtband eingeleitete Zugkraft herbeigeführten Belastungsstellung mittels des Blockierelements in seiner Beweglichkeit zumindest gehemmt ist, wobei das Gurtband im angeschnallten Zustand schlaufenförmig von der Zunge umgelenkt ist.

Eine Schlosszunge mit den eingangs genannten Merkmalen ist aus
DE 198 22 473 A1 bekannt, bei der ein als Klemmelement ausgebildetes Blockierelement drehbar um eine Achse angeordnet ist. Überschreitet die Gurtkraft einen vorbestimmten Wert, schwenkt das Klemmelement um seine Achse und klemmt das Gurtband mit einer Klemmkante gegen einen Klemmbacken des Zungenkörpers. Es hat sich nun herausgestellt, dass die bei einem Unfall auftretenden Kräfte so groß sind, dass die Schlosszunge verformt wird, wobei die Klemmkante des Klemmelements das Gurtband nicht sicher gegen den Klemmbacken klemmt.

Aus EP 2 377 417 B1 ist daher eine Schlosszunge bekannt, bei der das Umlenkelement aus der Durchlaufstellung in die Belastungsstellung entlang einer Anlagenfläche des Zungenkörpers bewegt wird, sodass für das Gurtband eine scherenartige Schikane ausgebildet wird, durch die das Gurtband verläuft und in der das Gurtband mit seinen Seiten flächig in Anlage mit der Anlagefläche des Zungenkörpers beziehungsweise mit dem Verengungsabschnitt des Blockierelements ist. Allerdings baut diese Schlosszunge aufgrund der Lagerung des Blockierelements mit seiner konvexen Außenfläche am Zungenkörper relativ groß und unsymmetrisch. Bei dieser Schlosszunge ist der konvexe Hohlraum, in den die nach oben und zur Vorderseite ausgerichteten Gurtschlitze münden und in dem das Blockierelement angeordnet ist, an der Vorderseite des Zungenkörpers von einer Abdeckung verschlossen.

Eine Schlosszunge mit den Merkmalen des Oberbegriffs des Anspruchs 1 ist aus DE 10 2014 114 207 A1 bekannt. Aus DE 10 2006 033 544 A1 ist zudem eine Schlosszunge bekannt, an dessen metallischer Platine sowohl ein Ende eines Beckengurtes als auch ein Ende eines Schultergurtes unbeweglich befestigt ist, wobei zwei Abdeckelemente die Platine im Bereich der Befestigung der Gurtenden umgeben.

Aufgabe der vorliegenden Erfindung ist es, die mit Bezug zum Stand der Technik geschilderten Probleme zumindest teilweise zu lösen und insbesondere eine Schlosszunge anzugeben, die einen kompakten Gesamteindruck vermittelt.

Gelöst wird die Aufgabe durch eine Schlosszunge mit den Merkmalen des unabhängigen Anspruchs. Vorteilhafte Weiterbildungen der Schlosszunge sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe durch eine Schlosszunge mit den eingangs genannten Merkmalen, bei der auf zumindest einer Seite des Zungenkörpers eine Abdeckung vorgesehen ist und die Abdeckung zumindest mit einem Teilabschnitt unterhalb des Gurtschlitzes angeordnet ist, wobei der unterhalb des Gurtschlitzes angeordnete Teilabschnitt der Abdeckung unmittelbar an den Gurtschlitz angrenzt und zumindest einen Teil des sich in der Durchlaufstellung befindlichen Blockierelements überdeckt.

Die Richtungsangaben beziehen sich auf die Einsteckrichtung der Schlosszunge, sodass der in das Gurtschloss einzusteckende Abschnitt der Schlosszunge unten angeordnet ist und der den Gurtschlitz aufweisende Abschnitt oben an der Schlosszunge angeordnet ist. Als Vorderseite wird hierbei die Seite der Schlosszunge aufgefasst, die im nicht angeschnallten Zustand, wenn die Schlosszunge im Bereich der B-Säule angeordnet ist, dem Insassen zugewandt ist. Die Rückseite ist also die in der abgeschnallten Stellung der B-Säule zugewandten Seite.

Die Erfindung betrifft insbesondere solche Schlosszungen, bei der sich der Gurtschlitz von der Rückseite zur Vorderseite erstreckt. Die Abdeckung befindet sich also an der Vorderseite oder an der Rückseite unmittelbar unterhalb des Gurtschlitzes, der an einer dieser Seiten mündet. Das Gurtband ist also insbesondere nicht an einer Oberseite aus der Schlosszunge herausgeführt.

Durch die Anordnung der Abdeckung unterhalb des Gurtschlitzes an der Vorder- oder Rückseite wird bei Schlosszungen, die ein Blockierelement aufweisen, ein kompakter Gesamteindruck vermittelt, wobei ein Abschnitt oder Teil des Blockierelements so hinter der Abdeckung angeordnet ist, dass es für einen Insassen bei normalem Gebrauch insbesondere im abgeschnallten Zustand nicht ersichtlich ist. Insbesondere ist die Abdeckung auf einer im abgeschnallten Zustand dem Insassen zugewandten Vorderseite der Schlosszunge angeordnet. Die Abdeckung kann aber auch auf der Rückseite angeordnet sein oder es kann jeweils eine Abdeckung auf der Vorder- und Rückseite angeordnet sein. Die Abdeckung ermöglicht es zudem, eine für die Montage des Blockierelements auf der Vorder- beziehungsweise Rückseite angeordnete Aussparung nach der Montage einfach zu überdecken. Die Abdeckung begrenzt also an der Vorder- oder Rückseite unmittelbar den Gurtschlitz. Es kann auch vorgesehen sein, dass die Abdeckung sich zumindest teilweise von der Vorderseite beziehungsweise Rückseite in den Zungenkörper zumindest teilweise hinein und damit zumindest teilweise durch den Zungenkörper parallel zum Gurtschlitz erstreckt.

In einer Ausführungsform weist das Blockierelement eine Aussparung auf, durch die das Gurtband insbesondere innerhalb des Gurtschlitzes durchführbar ist, sodass ein erster Teil des Blockierelements außerhalb der zumindest im angeschnallten Zustand gebildeten Schlaufe des Gurtbandes und ein zweiter, von dem ersten Teil durch die Aussparung beabstandeter Teil des Blockierelements innerhalb der zumindest im angeschnallten Zustand gebildeten Schlaufe des Gurtbandes angeordnet ist, wobei die Abdeckung den ersten Teil überdeckt. Der erste Teil des Blockierelements ist somit unterhalb der Gurtschlaufe angeordnet.

Der erste Teil des Blockierelements kann insbesondere bevorzugt mit seinem ersten Teil einen Verengungsabschnitt ausbilden, der von der Durchlaufstellung in die Belastungsstellung entlang einer Anlagefläche des Zungenkörpers bewegbar ist, sodass das Gurtband in der Belastungsstellung mit einem Gurtbandabschnitt sowohl mit der Anlagefläche des Zungenkörpers als auch mit dem Verengungsabschnitt des Blockierelements flächig in Anlage ist, wobei der Verengungsabschnitt zumindest in der Durchlaufstellung des Blockierelements von der Abdeckung überdeckt ist. Der Verengungsabschnitt und die Anlageflächen bilden in der Belastungsstellung also eine scherenartige Schikane aus, die das Gurtband in seiner Bewegung hemmt. In diesem Zusammenhang ist besonders bevorzugt, wenn zumindest in der Belastungsstellung der Zungenkörper mit einem die Anlagefläche aufweisenden Bereich durch zumindest einen Abschnitt, insbesondere durch die oben angesprochene Aussparung des Blockierelements hindurchgreift. In der Belastungsstellung ist also der die Anlagefläche aufweisende Abschnitt des Zungenkörpers in der Aussparung angeordnet, durch welche auch das Gurtband hindurchgeführt wird. Zwischen der Anlagefläche und dem entsprechenden Abschnitt des Zungenkörpers wird die scherenartige Schikane ausgebildet.

Für eine einfache Montage ist es bevorzugt, dass die Abdeckung kraftschlüssig an dem Zungenkörper festgelegt ist, wobei die Abdeckung insbesondere mittels unterhalb des Gurtschlitzes angeordneten und mit entsprechenden Ausnehmungen wechselwirkenden Vorsprüngen kraftschlüssig festgelegt ist. Die Vorsprünge können also an der Abdeckung ausgebildet sein, während die komplementären Ausnehmungen am Zungenkörper ausgebildet sind oder umgekehrt.

In einer weiteren Ausführungsform kann vorgesehen sein, dass die Abdeckung U-förmig ausgebildet ist und die Schenkel an den Gurtschlitz seitlich angrenzen, wobei der die Schenkel verbindende Teilabschnitt der Abdeckung unterhalb des Gurtschlosses angeordnet ist. Die Schenkel der U-förmigen Abdeckung sind also seitlich des Gurtschlitzes angeordnet und überdecken Abschnitte des Blockierelements. Insbesondere können sich die Schenkel der U-förmigen Abdeckung mit ihren Enden bis zu einem nach oben gerichteten Oberflächenabschnitt des Zungenkörpers erstrecken, wobei auch die Oberflächen der Enden der Schenkel nach oben gerichtet sind. Somit können ansonsten auch von oben sichtbare Elemente des Blockierelements von den Schenkeln abgedeckt werden. An den Schenkeln können Vorsprünge zur zusätzlichen kraftschlüssigen Festlegung der Abdeckung an dem Zungenkörper vorgesehen sein.

Die Abdeckung U-förmig auszuführen, kann insbesondere dann sinnvoll sein, wenn an dem Blockierelement nach außen auskragende Anschlagselemente ausgebildet sind, die in der Belastungsstellung in Anlage mit Gegenanschlagsflächen an dem Zungenkörper sind, wobei die Gegenanschlagsflächen seitlich von dem Gurtschlitz angeordnet sind. In diesem Zusammenhang kann vorgesehen sein, dass jeweils eine Kappe auf die Anschlagselemente des Blockierelements aufgebracht ist, wobei die Kappe einen dunklen Farbton insbesondere entsprechend dem Farbton der Umspritzung der Schlosszunge aufweist, sodass die Anschlagselemente für den Insassen nicht einfach zu erkennen sind.

Insbesondere auch unabhängig von der zuvor beschriebenen Lösung kann auch durch Lackierung des Blockierelements in einem dunklen Farbton erreicht werden, dass das Blockierelement für Insassen insbesondere in der abgeschnallten Stellung nicht ohne weiteres erkennbar ist. Insbesondere können auch nur Teilbereiche des Blockierelements lackiert sein.

Es kann auch vorgesehen sein, dass das Gurtband durch die Abdeckung hindurchführbar ist, sodass die Abdeckung den Gurtschlitz auf der Seite des Zungenkörpers umschließt und der Gurtschlitz von der Abdeckung vollumfänglich auf der entsprechenden Seite des Zungenkörpers begrenzt ist.

Der Zungenkörper ist durch eine Platine aus Metall und eine die Platine zumindest teilweise umgebende Umspritzung aus Kunststoff gebildet.

Die Erfindung sowie das technische Umfeld werden nachfolgend anhand der Figuren beispielhaft erläutert. Es zeigen schematisch
- Figur 1:: eine teilweise Explosionsansicht einer Schlosszunge,
- Figur 2:: ein Blockierelement der Schlosszunge,
- Figur 3:: eine Rückansicht auf eine Abdeckung der Schlosszunge,
- Figur 4:: eine Perspektivansicht der Schlosszunge mit montierter Abdeckung und
- Figur 5:: eine Detailansicht einer weiteren Ausführungsform einer Schlosszunge.

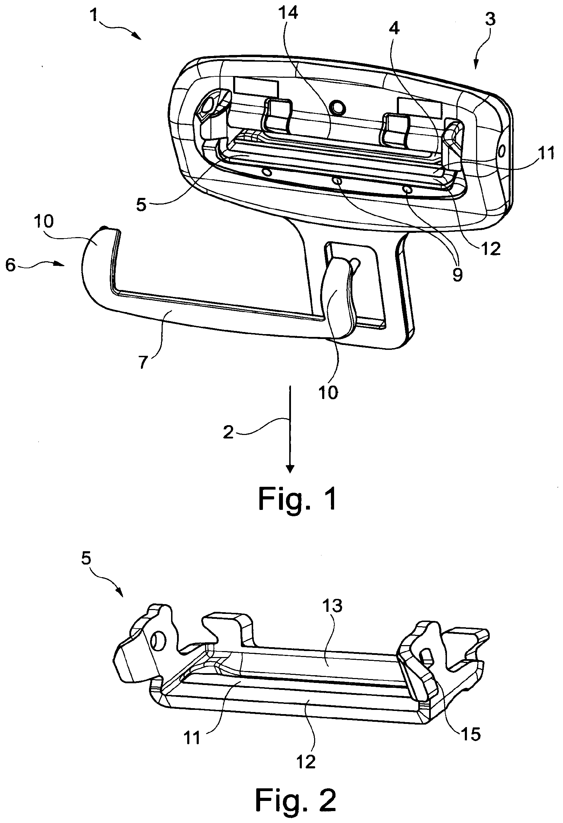

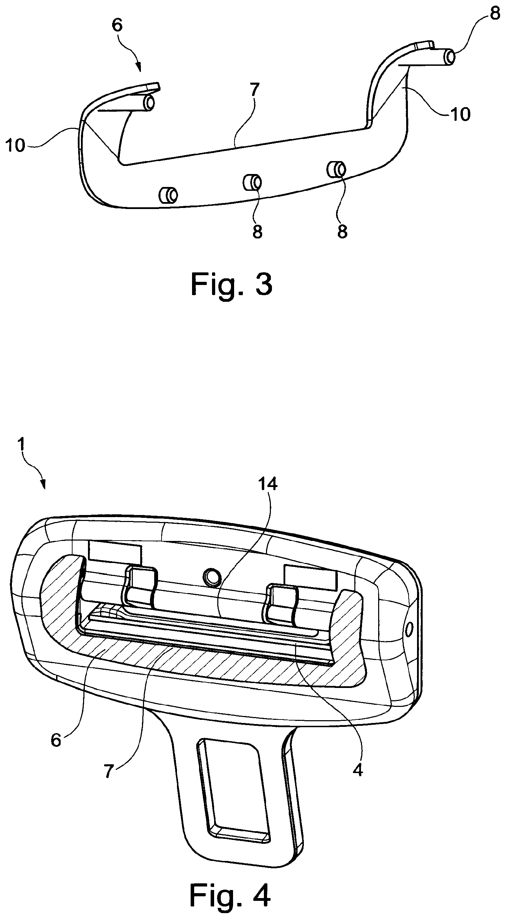

Figuren 1 und 4 zeigen eine Schlosszunge 1 mit einem sich in eine Einsteckrichtung 2 erstreckenden Zungenkörper 3, welcher eine Platine und eine Umspritzung umfasst. In dem Zungenkörper 3 ist eine quer zur Einsteckrichtung 2 verlaufender Gurtschlitz 4 ausgebildet. In dem Zungenkörper 3 ist ein in der Figur 2 einzeln dargestelltes Blockierelement 5 beweglich angeordnet.

Das Blockierelement 5 umfasst einen ersten Teil 12 und einen zweiten Teil 13, die durch eine Aussparung 11 voneinander beabstandet sind. Durch die Aussparung 11 ist das nicht dargestellte Gurtband hindurchgeführt. Das Blockierelement 5 umfasst zudem seitlich auskragende Anschlagselemente 15, wobei in der Umspritzung des Zungenkörpers 3 Gegenanschlagsflächen ausgebildet sind, mit denen die Anschlagselemente 15 des Blockierelements in der Belastungsstellung in Anlage kommen. Das Blockierelement 5 ist mittels eines Torsionsstabes drehbar in dem Zungenkörper 3 gelagert. Wird im angeschnallten Zustand eine Zugkraft in das Gurtband eingeleitet, so sorgt die von dem Gurtband auf den zweiten Teil 13 wirkende Kraft dafür, dass das Blockierelement 5 verschwenkt wird, wodurch der einen Verengungsabschnitt ausbildende erste Teil 12 des Blockierelements 5 entlang einer Anlagefläche 14 des Schlosskörpers 3 bewegt wird, wodurch eine scherenartige Schikane für das Gurtband zwischen der Anlagefläche 14 und dem ersten Teil 12 des Blockierelements ausgebildet wird. Durch diese Schikane wird die Bewegung des Gurtbandes zumindest gehemmt, wenn nicht sogar vollständig unterbunden.

An den Zungenkörper 3 ist eine in Figur 3 im Detail dargestellte Abdeckung 6 anbringbar. Die Abdeckung 6 ist U-förmig ausgestaltet und weist einen Teilabschnitt 7 und zwei davon abstehende Schenkel 10 auf. Auf einer dem Zungenkörper 3 zugewandten Seite weist die Abdeckung 6 Vorsprünge 8 auf, die zur kraftschlüssigen Festlegung der Abdeckung 6 in entsprechende Ausnehmungen 9 am Zungenkörper 3 einbringbar sind. Wie aus Figur 4 ersichtlich ist, grenzt der Teilabschnitt 7 unmittelbar an den Gurtschlitz 4 an, sodass durch den Teilabschnitt 7 der erste Teil 12 des Blockierelements 5 überdeckt ist. Die Schenkel 10 der Abdeckung 6 erstrecken sich seitlich entlang des Gurtschlitzes 4 und überdecken die Anschlagselemente 15. Die Schenkel 10 erstrecken sich mit ihren Enden zu einer Oberseite der Schlosszunge 1, sodass die Oberfläche der Enden nach oben gerichtet sind.

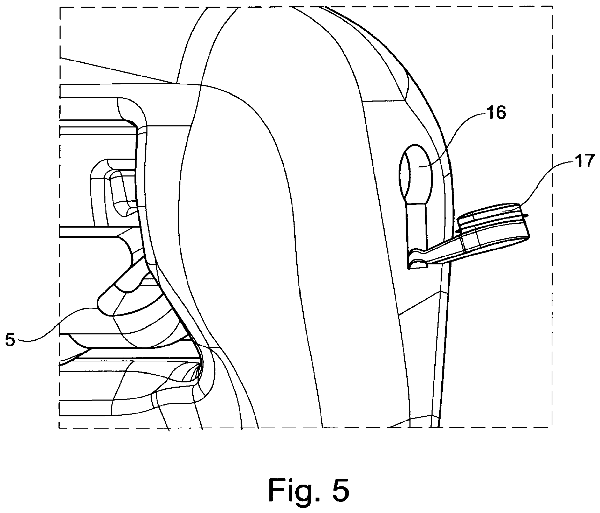

Aus Figur 5 ist zu erkennen, dass in der Umspritzung des Zungenkörpers 3 eine Öffnung 16 zum Einführen eines Torsionsstabes ausgebildet ist. Die Öffnung 16 kann durch einen einteilig an die Umspritzung des Zungenkörpers 3 angespritzten Verschluss 17 verschlossen werden. Es wäre auch vorstellbar, dass eine Öffnung 16 in der Umspritzung der Schlosszunge 1 dadurch verschlossen wird, dass zunächst ein Kragen um die Öffnung 16 herum ausgebildet wird, welcher mittels eines Stempels zum Verschließen in die Öffnung 16 gedrückt wird. Es wäre auch vorstellbar, dass die Öffnung 16 durch einen Stopfen verschlossen wird, der in die Öffnung 16 eingebracht wird. Hierzu könnte beispielsweise ein Stück von einem Draht aus einem entsprechenden Material abgetrennt werden und in die Öffnung eingebracht werden.

### Bezugszeichenlisten

- 1: Schlosszunge
- 2: Einsteckrichtung
- 3: Zungenkörper
- 4: Gurtschlitz
- 5: Blockierelement
- 6: Abdeckung
- 7: Teilabschnitt
- 8: Vorsprung
- 9: Ausnehmung
- 10: Schenkel
- 11: Aussparung
- 12: erster Teil
- 13: zweiter Teil
- 14: Anlagefläche
- 15: Anschlagselement
- 16: Öffnung
- 17: Verschluss

## Patentansprüche

1. Schlosszunge (1) mit einem sich in eine Einsteckrichtung (2) erstreckenden Zungenkörper (3), wobei der Zungenkörper (3) durch eine Platine aus Metall und eine die Platine zumindest teilweise umgebende Umspritzung aus Kunststoff gebildet ist und wobei in dem Zungenkörper (3) quer zur Einsteckrichtung (2) ein Gurtschlitz (4) zur Durchführung eines Gurtbandes ausgebildet ist, und mit einem beweglich in dem Zungenkörper (3) angeordneten Blockierelement (5), wobei das Gurtband in einer unbelasteten Durchlaufstellung des Blockierelements (5) durch den Gurtschlitz (4) beweglich ist und in einer durch eine in das Gurtband eingeleitete Zugkraft herbeigeführten Belastungsstellung mittels des Blockierelements (5) in seiner Beweglichkeit zumindest gehemmt ist, wobei das Gurtband im angeschnallten Zustand schlaufenförmig von der Schlosszunge (1) umgelenkt ist, **dadurch gekennzeichnet, dass** auf zumindest einer Seite des Zungenkörpers (3) eine Abdeckung (6) vorgesehen ist und die Abdeckung (6) zumindest mit einem Teilabschnitt (7) unterhalb des Gurtschlitzes (4) angeordnet ist, wobei der unterhalb des Gurtschlitzes (4) angeordnete Teilabschnitt (7) der Abdeckung (6) unmittelbar an den Gurtschlitz (4) angrenzt und zumindest einen Teil des sich in der Durchlaufstellung befindlichen Blockierelements (5) überdeckt.

2. Schlosszunge (1) nach Anspruch 1, wobei die Abdeckung (6) kraftschlüssig an dem Zungenkörper (2) festgelegt ist.

3. Schlosszunge (1) nach Anspruch 2, wobei die Abdeckung (6) mittels unterhalb des Gurtschlitzes (4) angeordneten und mit entsprechenden Ausnehmungen (9) wechselwirkenden Vorsprüngen (8) kraftschlüssig festgelegt ist.

4. Schlosszunge (1) nach einem der vorhergehenden Ansprüche, wobei die Abdeckung U-förmig ausgebildet ist und die Schenkel (10) an den Gurtschlitz (4) seitlich angrenzen.

5. Schlosszunge (1) nach Anspruch 4, wobei die Schenkel (10) seitlich des Gurtschlitzes (4) angeordnete Abschnitte des Blockierelements (5) überdecken.

6. Schlosszunge (1) nach Anspruch 4 oder 5, wobei die Schenkel (10) sich bis zu einem nach oben gerichteten Oberflächenabschnitt des Zungenkörpers (2) erstrecken und die Oberflächen ihrer Enden nach oben gerichtet sind.

7. Schlosszunge (1) nach einem der Ansprüche 1 bis 3, wobei die Abdeckung (6) den Gurtschlitz (4) auf der Seite des Zungenkörpers (3) umschließt, so dass der Gurtschlitz (4) auf der Seite des Zungenkörpers (3) von der Abdeckung (6) vollumfänglich begrenzt ist.

8. Schlosszunge (1) nach einem der vorhergehenden Ansprüche, wobei das Blockierelement (5) eine Aussparung (11) aufweist, durch die das Gurtband durchführbar ist, so dass ein erster Teil (12) des Blockierelements (5) außerhalb der zumindest im angeschnallten Zustand gebildeten Schlaufe des Gurtbandes und ein zweiter, von dem ersten Teil durch die Aussparung (11) beabstandeter Teil (13) des Blockierelements (5) innerhalb der zumindest im angeschnallten Zustand gebildeten Schlaufe des Gurtbandes angeordnet ist, wobei die Abdeckung (6) den ersten Teil (12) überdeckt.

9. Schlosszunge (1) nach einem der vorhergehenden Ansprüche, wobei das Blockierelement (5) von der Durchlaufstellung in die Belastungsstellung mit einem Verengungsabschnitt entlang einer Anlagefläche (14) des Zungenkörpers (3) bewegbar ist, so dass das Gurtband in der Belastungsstellung mit einem Gurtbandabschnitt sowohl mit der Anlagefläche (14) des Zungenkörpers (3) als auch mit dem Verengungsabschnitt des Blockierelements (5) flächig in Anlage ist, wobei der Verengungsabschnitt zumindest in der Durchlaufstellung des Blockierelements (5) von der Abdeckung (6) überdeckt ist.

10. Schlosszunge (1) nach Anspruch 9, wobei zumindest in der Belastungsstellung der Zungenkörper (3) mit einem die Anlagefläche (14) aufweisenden Bereich durch zumindest einen Abschnitt des Blockierelements (5) hindurchgreift.

## Claims

1. Buckle tongue (1) having a tongue body (3) extending in an insertion direction (2), the tongue body (3) being formed by a plate made of metal and an overmolding made of plastics material that surrounds the plate at least in part, and a belt slot (4) being formed in the tongue body (3) transversely to the insertion direction (2) for the passage of a belt strap, and having a blocking element (5) movably arranged in the tongue body (3), the belt strap being movable through the belt slot (4) when the blocking element (5) is in an unloaded passage position and, in a loading position brought about by a tensile force introduced into the belt strap, the belt strap being at least restricted in its mobility by means of the blocking element (5), the belt strap, in the fastened state, being deflected by the buckle tongue (1) in the manner of a loop, **characterized in that** a cover (6) is provided on at least one side of the tongue body (3) and at least a portion (7) of the cover (6) is arranged below the belt slot (4), the portion (7) of the cover (6) arranged below the belt slot (4) directly adjoining the belt slot (4) and covering at least part of the blocking element (5) located in the passage position.

2. Buckle tongue (1) according to claim 1, wherein the cover (6) is frictionally fixed to the tongue body (2).

3. Buckle tongue (1) according to claim 2, wherein the cover (6) is frictionally fixed by means of projections (8) arranged below the belt slot (4) and interacting with corresponding recesses (9).

4. Buckle tongue (1) according to any of the preceding claims, wherein the cover is U-shaped and the legs (10) laterally adjoin the belt slot (4).

5. Buckle tongue (1) according to claim 4, wherein the legs (10) cover portions of the blocking element (5) arranged to the side of the belt slot (4).

6. Buckle tongue (1) according to either claim 4 or claim 5, wherein the legs (10) extend as far as an upwardly directed surface portion of the tongue body (2) and the surfaces of the ends thereof are directed upward.

7. Buckle tongue (1) according to any of claims 1 to 3, wherein the cover (6) encloses the belt slot (4) on the side of the tongue body (3), such that the belt slot (4) is fully delimited by the cover (6) on the side of the tongue body (3).

8. Buckle tongue (1) according to any of the preceding claims, wherein the blocking element (5) has a recess (11) through which the belt strap can be passed, such that a first part (12) of the blocking element (5) is arranged outside the loop of the belt strap formed at least in the fastened state and a second part (13) of the blocking element (5) spaced apart from the first part by the recess (11) is arranged inside the loop of the belt strap formed at least in the fastened state, the cover (6) covering the first part (12).

9. Buckle tongue (1) according to any of the preceding claims, wherein the blocking element (5), with a constriction portion, can be moved from the passage position into the loading position along a contact surface (14) of the tongue body (3) such that, in the loading position, a belt strap portion of the belt strap is in planar contact with the contact surface (14) of the tongue body (3) and with the constriction portion of the blocking element (5), wherein the constriction portion is covered by the cover (6) at least in the passage position of the blocking element (5).

10. Buckle tongue (1) according to claim 9, wherein, at least in the loading position, a region of the tongue body (3) having the contact surface (14) reaches through at least a portion of the blocking element (5).

## Revendications

1. Languette de verrouillage (1) comportant un corps de languette (3) s'étendant dans un sens d'insertion (2), le corps de languette (3) étant formé par une plaque en métal et un surmoulage en plastique entourant au moins partiellement la plaque et une fente de ceinture (4) étant conçue transversalement au sens d'insertion (2) dans le corps de languette (3) pour permettre le passage d'une sangle de ceinture, et comportant un élément de blocage (5) agencé de manière mobile dans le corps de languette (3), la sangle de ceinture étant mobile dans une position de passage non sollicitée de l'élément de blocage (5) à travers la fente de ceinture (4) et étant au moins inhibée dans sa mobilité grâce à une position de sollicitation provoquée par une force de traction introduite dans la sangle de ceinture au moyen de l'élément de blocage (5), la sangle de ceinture étant déviée, sous la forme d'une boucle, de la languette de verrouillage (1) à l'état attaché, **caractérisée en ce qu'**un couvercle (6) est prévu sur au moins un côté du corps de languette (3) et le couvercle (6) est agencé, au moins avec une section partielle (7), sous la fente de ceinture (4), la section partielle (7) du couvercle (6) agencée sous la fente de ceinture (4) étant directement adjacente à la fente de ceinture (4) et recouvrant au moins une partie de l'élément de blocage (5) se trouvant dans la position de passage.

2. Languette de verrouillage (1) selon la revendication 1, le couvercle (6) étant fixé au corps de languette (2) à force.

3. Languette de verrouillage (1) selon la revendication 2, le couvercle (6) étant fixé à force au moyen de saillies (8) agencées sous la fente de ceinture (4) et interagissant avec des saillies correspondantes (9).

4. Languette de verrouillage (1) selon l'une des revendications précédentes, le couvercle étant conçu en forme de U et les branches (10) étant adjacentes latéralement à la fente de ceinture (4).

5. Languette de verrouillage (1) selon la revendication 4, les branches (10) recouvrant des sections de l'élément de blocage (5) agencées latéralement à la fente de ceinture (4).

6. Languette de verrouillage (1) selon la revendication 4 ou 5, les branches (10) s'étendant jusqu'à une section de surface dirigée vers le haut du corps de languette (2) et les surfaces de leurs extrémités étant dirigées vers le haut.

7. Languette de verrouillage (1) selon l'une des revendications 1 à 3, le couvercle (6) enfermant la fente de ceinture (4) sur le côté du corps de languette (3) de sorte que la fente de ceinture (4) est entièrement délimitée par le couvercle (6) sur le côté du corps de languette (3).

8. Languette de verrouillage (1) selon l'une des revendications précédentes, l'élément de blocage (5) présentant une encoche (11) à travers laquelle la sangle de ceinture peut être passée, de sorte qu'une première partie (12) de l'élément de blocage (5) est agencée à l'extérieur de la boucle de la sangle de ceinture formée au moins à l'état attaché et une seconde partie (13) de l'élément de blocage (5), espacée de la première partie par l'encoche (11), est agencée à l'intérieur de la boucle de la sangle de ceinture formée au moins à l'état attaché, le couvercle (6) recouvrant la première partie (12).

9. Languette de verrouillage (1) selon l'une des revendications précédentes, l'élément de blocage (5) pouvant être déplacé le long d'une surface de contact (14) du corps de languette (3) de la position de passage à la position de sollicitation au moyen d'une section de rétrécissement, de sorte que la sangle de ceinture est en contact plat, dans la position de sollicitation, au moyen d'une section de sangle de ceinture, à la fois avec la surface de contact (14) du corps de languette (3) et avec la section de rétrécissement de l'élément de blocage (5), la section de rétrécissement étant recouverte par le couvercle (6) au moins dans la position de passage de l'élément de blocage (5).

10. Languette de verrouillage (1) selon la revendication 9, le corps de languette (3) entrant en prise, au moins dans la position de sollicitation, avec une zone présentant la surface de contact (14) au moyen d'au moins une section de l'élément de blocage (5).
